# EUROPEAN PATENT APPLICATION

(11) **EP 4 325 845 A1**
(43) Date of publication of application: **21.02.2024**
(21) Application number: 22382788.2
(22) Date of filing: 17.08.2022
(51) Int. Cl.: H04N 13/156, H04N 13/194, H04N 13/239, H04N 13/167, H04N 13/296

(54) **REMOTE AUDIOVISUAL ASSISTANCE METHOD**

(71) Applicant: 3D Experiences Iberia, S.L., 15707 Santiago de Compostela, A Coruña (ES); Ruibal Moldes, S.L., 36002 Pontevedra (ES)
(72) Inventor: CRIADO-SORS CORTÉS, Enrique, E-28035 Madrid (ES)
(74) Representative: ABG Intellectual Property Law, S.L.

(57) **Abstract**

The present invention belongs to the technical field of remote cooperative activities by means of augmented reality in three dimensions (3D). More particularly, it is aimed at a method for transmitting and combining multimedia information at remote workstations.

## Description

### OBJECT OF THE INVENTION

The present invention belongs to the technical field of remote cooperative activities by means of augmented reality in three dimensions (3D). More particularly, it addresses a method for transmitting and combining multimedia information at remote workstations.

### BACKGROUND TO THE INVENTION

There are certain highly specialised professional activities which, due to their complexity, require that the person carrying them out has extensive experience in them or, failing that, that a second more experienced person is included to exercise the role of mentor over the person carrying them out, more precisely, to carry out a supervisory task over another person who exercises the role of apprentice.

This modus operandi is very common in the field of medicine and, more specifically, in surgery, where it is very common that in addition to the surgeon who is going to carry out the operation (apprentice) and the support team that assists them, there is also a more experienced surgeon (mentor) who can supervise the whole process.

It is not always easy to have a highly qualified mentor and an apprentice available in the same space and time slots, so supervised activity often has to be postponed for long periods of time. These postponements often result in high costs for the companies and/or professionals carrying out the activities to be supervised and, in addition, it should be borne in mind that time can be a crucial factor in some of these activities, such as surgery, where there are certain operations that cannot be postponed.

For these reasons, some devices have been launched on the market that allow the sending and receiving of multimedia content that can be used for the purpose of remotely assisting in activities that require monitoring.

Most of these systems or devices do not allow the use of stereoscopic (3D) imaging, which provides a high degree of security and reliability for this type of remote collaboration. This contribution is especially critical in some specialised fields such as surgery, where being able to give real-time indications in a three-dimensional environment greatly increases the ability to perform this type of collaboration successfully, since it is possible to distinguish, among other things, size, orientation, and relative distance between the elements appearing in the image.

One of the main drawbacks of these systems is the difficulty of finding a compromise between image quality and image reception latency when sent to remote units of the mentoring devices. In addition, the transmission of 3D images requires two independent video streams (left and right channel) which have to remain synchronised throughout the transmission process. Such synchronisation is not supported in conventional electronic systems so that current solutions tend to compress the frames of both channels (left and right) into a single frame, causing the image quality to be reduced by at least 50%.

In addition, the transmission of two video sources over a network can suffer from delays, micro-cuts and other problems which can lead to a time lag between the two signals when they are received. In a two-dimensional system, this problem would not be so important, as a small-time lag is hardly noticeable, but in a system handling 3D signals the problem is aggravated, as it could mean that each eye is seeing a different image, making the received image of little use to the receiver.

In the state of the art, the problem of lack of synchronisation and time lag tends to be solved by compressing the signals, which causes the loss of some of the original resolution as well as increasing the latency of the system.

On the one hand, in general, the devices on the market today, in addition to not having the necessary characteristics to capture and/or reproduce 3D images, tend to reduce the quality and refresh rate of the image sent in order to reduce the latency in sending it, which does not allow certain activities to be monitored with sufficient reliability or precision.

On the other hand, there are devices with sufficiently advanced multimedia technology to send and receive high-resolution images, but they are not equipped to work with two 3D image streams synchronously. Conventional 3D signal process significantly increases the latency of sending and receiving signals, which would also make it impossible to monitor certain activities reliably and accurately.

### DESCRIPTION OF THE INVENTION

The present invention proposes a method of transmitting and combining multimedia information remotely according to claim 1, a computer network according to claim 15, a computer program according to claim 18 and a computer readable medium according to claim 19. Preferred embodiments of the invention are defined in the dependent claims.

In a first inventive aspect, the invention provides a *computer-implemented method for transmitting and combining multimedia information remotely over a computer network, the computer network comprising: a first computer module comprising:*
- *first stereoscopic 3D image capture means configured to generate two data signals (L1, R1) containing information about a first left image and a first right image, respectively;*
- *first 3D image reproduction means;*
- *first stereoscopic 3D image processing means;*
- *first communication means configured to send and receive data either wired or wirelessly;*
*wherein the method comprises the following steps:*
*i) generating, via the first stereoscopic 3D image capture means, two data signals (L1, R1) with information about a first captured left image and* a *first captured right image;*
*ii) packing, by means of the first image processing means, the signals captured in step i);*
*iii) sending, from the first module to a second module as a single progressive stereoscopic 3D image signal, via the first communication means, the frame resulting from packing the image in step ii);*
*x) unpacking, by means of the first progressive stereoscopic 3D image processing means, the frames received as a single progressive stereoscopic 3D image signal from a second module, so as to obtain two signals (L2, R2) containing information about a second left image and a second right image captured by a second image capturing means;*
*xi) forming, by means of the first stereoscopic 3D image processing means, an augmented stereoscopic 3D image by overlaying the frames unpacked in step x) L2 and R2, with the frames obtained in step i) L1 and R1, according to the following sub-steps:*
   *a) synchronising and overlaying a frame from the second left image (L2) with* a *frame from the first left image (L1); and*
   *b) synchronising and overlaying a frame of the second right image (R2) with a frame of the first right image (R1);*
*xii) reproducing, on the first 3D image reproduction means, the frame resulting from sub-step xi.a) immediately followed by the frame resulting from sub-step xi.b).*

In one embodiment, the first module comprising a first high-resolution stereoscopic 3D image capture means. Such means, e.g. high-resolution three-dimensional image capturing cameras, must be capable of stereoscopic image capturing, i.e. generating two independent data signals, a first left image (L1) corresponding to the left data channel and a first right image (R1) corresponding to the right data channel.

In one embodiment, said first high-resolution stereoscopic 3D image capturing means have a resolution of at least 1080i, i.e. each frame must be divided into 1080 horizontal lines which are projected in a manner with a frequency of at least 50 Hz. In a preferred embodiment, the projection frequency of the frames captured by the first image capture means will be 60 Hz.

The first module also comprises a first three-dimensional image reproduction means, for example a high-resolution display, which is capable of reproducing high-resolution images whose frames are reproduced at a frequency of at least 50 Hz. In a preferred embodiment, the reproduction frequency of the 3D image frames by the first 3D image reproduction means may alternatively be set to 50 or 60 Hz, depending on the user's preferences or needs.

The first module further comprises first stereoscopic 3D image processing means. The first processing means allow composing stereoscopic 3D augmented reality images by combining a first frame captured by the first module via the first stereoscopic 3D image capturing means with a second frame received from a second remote module. The first processing means decompose the frame received from the second module into two frames: left and right, which will be formed with the left and right frames of the stereoscopic 3D image captured by the first module to obtain a stereoscopic 3D augmented reality image.

The first module also comprises first communication means configured to send and receive data wired or wirelessly to second communication means contained in a second remote module.

In step i), the remote audio-visual assistance method generates, by means of the first stereoscopic 3D image capturing means of the first module, two data signals simultaneously: L1, containing information about a first left image; and R1, containing information about a first right image.

Next, step ii) of the method is carried out, in which the signals captured in step i) are packed by means of the first image processing means of the first module. Advantageously, the handling of these signals (L1, R1) through the packing of step ii) allows the synchronisation of both signals to be maintained without the need to resort to other means of hardware/software synchronisation that could increase the latency of the system. In addition, this type of packing does not require any image processing, so the system hardware (processing means) is able to implement it with ultra-low latency.

In a particular embodiment, an additional signal is generated in the packing step ii) and will be sent included in the generated packet to verify its synchronisation. In a preferred embodiment the synchronisation signal will be a timestamp, for example the signal may be a timestamp or clock timestamp.

Once the image packing step is completed, step iii) of the method begins, in which the process of sending each frame previously packed in step ii) of the method as a single progressive stereoscopic 3D image signal from the first module to a second module is carried out.

Each of these new frames comprises information about the left and right images generated in step i) and packed in step ii) and aims to minimise the latency produced in the sending step so that the new frames are received by the remote module smoothly and without loss of quality or information.

The next step of the method performed by the first module is step x), which consists of unpacking, by means of the first image processing means, the packed frames received as a single progressive stereoscopic 3D image signal arriving from a second module. This results in two signals (L2, R2) containing information about a second left image and a second right image captured by a second image capture means.

Advantageously, the left and right images are received packed into a single frame, so that both remain synchronised with each other throughout the process.

In a particular embodiment, the packet includes a synchronisation signal that is also unpacked in step x), e.g. a timestamp by which the images received in the packet are synchronised with those generated in the local module.

The method then executes step xi), which consists of forming, by means of the first stereoscopic 3D image processing means, a stereoscopic 3D augmented reality image by overlaying the frames obtained in step x) L2 and R2, with the frames captured in step i) L1 and R1. This process is performed according to the following sub-steps: a) firstly, a frame containing information from the second left image L2 is synchronised and overlaid with a frame from the first left image L1; b) secondly, a frame containing information from the second right image R2 is synchronised and overlaid with a frame containing information from the first right image R1.

As a product of this step, a stereoscopic three-dimensional augmented reality image is obtained, comprising the first image obtained in the first module by means of the first image capture means, in which a first activity can be observed, for example the activity carried out by a first user with the role of an apprentice, and on which an activity captured in a second module by means of second image capturing means has been overlaid and synchronised, in which a second activity can be observed, for example an activity performed by a second user in the role of a mentor giving advice to the apprentice.

In a particular embodiment, in step xi) the order of overlaying the images in sub-steps a) and b) can be reversed. For example, in step xi).a, a frame of the first left image (L1) is overlaid on a frame of the second left image (L2) and in step xi).b a frame of the first right image (R1) is overlaid on a frame of the second right image (R2);

In a particular embodiment, the user can choose the image to be overlaid during the process of step xi) via a means of reversing the image overlay, e.g., a switch.

In a particular embodiment, in step xi), the synchronisation sub-steps a) and b) use an additional synchronisation signal included in the unpacked packet in step x) to verify the synchronisation of the previously unpacked frames.

Step xii) consists of reproducing the frame resulting from sub-step xi.a) and simultaneously the frame resulting from sub-step xi.b) on the first 3D image reproduction means of the first module.

The first reproduction means reproduce in the first module the stereoscopic 3D augmented reality image frames to a first user, who can visualise the image and in turn follow the instructions obtained through augmented reality and observe their own activity in more detail thanks to the image captured by the first capture means in the first module. In this way, a successive stereoscopic 3D augmented reality image composition is realised. The frames formed in step xi) are reproduced at the same frequency and resolution as the original, so that the first user experiences no loss of detail or image quality.

Advantageously, this reproduction system will always play back the image captured locally (by the first or second capture means), which increases the security of the system since in the event of a network outage, it will continue to play back the local image even if the remote image is lost.

This method allows for remote transmission and combining of multimedia information, which provides great advantages in certain activities that require the ability to share high quality multimedia information remotely in real time and without losing any of the information during the communication process. For example, in certain tasks that require mentoring, being able to do it remotely makes it easier to find an expert who is available at that moment to carry out the supervision of the activity, taking into account both the travel time it saves and the fact that they can be located anywhere in the world. This is very important as it is not always easy to find an expert available for certain activities that require a high level of specialisation.

This method and system of remotely transmitting and combining multimedia information has the advantage of realistically, accurately and in depth capturing both the activity to be mentored and the supervisory instructions issued by the expert in perfect stereoscopic 3D synchronisation. This is a decisive factor that current commercial solutions do not have, because in some fields, such as surgery, it is of great importance to be able to have the same perception as the surgeon who is present at the operation scene. This allows operations to be completed in a totally reliable and efficient manner, which would be impossible to achieve with lower quality, two-dimensional (2D) images or without the indications being overlaid in the right place for the apprentice to interpret them correctly.

In addition, the system has an image encoding method that allows sending and receiving high quality stereoscopic 3D image with ultra-low latency without lowering its quality, which not only allows both the apprentice and the mentor to visualise the mentored activity in a reliable way, but also to do so synchronously and without delays, allowing both the apprentice and the mentor to collaborate in real time.

In a particular embodiment of the invention, the video captured by the first capture means and played back by the first reproduction means is high quality 1080i video played back at a frequency of at least 50 Hz.

In a preferred embodiment of the invention, the video captured by the first capture means and played back by the first reproduction means is high quality 1080i video played back at a frequency that can alternate between 50 or 60Hz.

In a second inventive aspect, the invention provides a *computer-implemented method for transmitting and combining multimedia information remotely over a computer network, the computer network comprising: a second computer module comprising:*
- *second stereoscopic 3D image capture means configured to generate two data signals (L2, R2) with information about a second left image and a second right image, respectively;*
- *second 3D image reproduction means;*
- *second stereoscopic 3D image processing means;*
- *second communication means configured to send and receive data wired or wirelessly;*
*wherein the method comprises the following steps:*
*iv) generating, by means of the second means of stereoscopic 3D image capture, two data signals (L2, R2) with information about a second captured left image and a second captured right image;*
*v) unpacking, by means of the second progressive stereoscopic 3D image processing means, the frames received as a single progressive stereoscopic 3D image signal from a first module, so that the two signals (L1, R1) with information about the first left image and the first right image captured by the first image capturing means are obtained;*
*vi) forming, by means of the second stereoscopic 3D image processing means, an augmented stereoscopic 3D image by overlaying the frames captured in step iv), L2, R2, with the frames obtained in step v), L1 and R1, according to the following sub-steps:*
   *a) synchronising and overlaying a frame from the second left image (L2) with a frame from the first left image (L1); and*
   *b) synchronising and overlaying a frame of the second right image (R2) with a frame of the first right image (R1);*
*vii) reproducing, in the second 3D image reproduction means, the frame resulting from sub-step vi.a) and simultaneously the frame resulting from sub-step vi.b);*
*viii) packing, by means of the second stereoscopic 3D image processing means, the signals captured in step iv);*
*ix) sending, from the second module to the first module as a single progressive stereoscopic 3D image signal, via the second means, the frame resulting from packing in step viii).*

In one embodiment, a second module comprises a second high-resolution stereoscopic 3D image capture means. Such means, e.g., high-resolution three-dimensional image capturing cameras, must have the capability to capture an image stereoscopically, i.e. to generate two independent data signals, a second left image (L2) corresponding to the left data channel and a second right image (R2) corresponding to the right data channel.

In one embodiment, such means must also have a resolution of at least 1080i, i.e., each frame must be divided into 1080 horizontal lines which are projected at a frequency of at least 50 Hz. In a preferred embodiment, the projection frequency of the frames captured by the second image capture means will be 60 Hz.

The second module also comprises a second three-dimensional image reproduction means, for example a high-resolution display, which is capable of reproducing high-resolution images whose frames are reproduced at a frequency of at least 50 Hz. In a preferred embodiment, the reproduction frequency of the 3D image frames by the first 3D image reproduction means may alternatively be set to 50 or 60 Hz, depending on the user's preferences or needs.

The second module further comprises a second stereoscopic 3D image processing means. The second processing means allow composing stereoscopic 3D augmented reality images by combining a first frame captured in the second module by the second stereoscopic 3D image capture means with a second frame received from a remote first module. The second processing means decompose the frame received from the first module into two frames: left and right, which will be formed with the left and right frames of the stereoscopic 3D image captured by the second module to obtain a stereoscopic 3D augmented reality image.

The second module also comprises second communication means configured to send and receive data wired or wirelessly to first communication means comprised in a first remote module.

In this embodiment, the second module performs step iv) of the method, generating by means of the second stereoscopic 3D image capturing means of the second module, two data signals simultaneously: L2, which contains information about a second left image; and R2, which contains information about a second right image.

The next step of the method, step v), consists of unpacking, by means of the second progressive stereoscopic 3D image processing means, the frames received from a first module as a single 3D progressive image signal, which are unpacked in such a way as to obtain the two signals (L1, R1) with information on the first left image and the first right image that have been received by the second module.

In a particular embodiment, the packet includes a synchronisation signal that is also unpacked in step v), e.g., a timestamp with which the images received in the packet are synchronised with those generated in the local module.

The method then executes step vi), which consists of forming by means of the second stereoscopic 3D image processing means, an augmented stereoscopic 3D image by overlaying the frames captured in step iv), L2, R2, with the frames obtained in step v) L1, R1. This process is performed according to the following sub-steps, which are performed simultaneously: a) synchronising and overlaying a frame containing information from the second left image, L2 with a frame from the first left image, L1; b) synchronising and overlaying a frame containing information from the second right image, R2 with a frame containing information from the first right image R1.

As a product of this step, a stereoscopic three-dimensional augmented reality image is obtained, comprising the image received from a first module, in which a first activity can be observed, for example the activity performed by a first user with the role of apprentice, on which the activity captured in the second module has been overlaid and synchronised by means of the second image capture means, in which a second activity can be observed, for example the activity performed by a second user with the role of mentor who gives advice to the apprentice.

In a particular embodiment, in step vi) the order of image overlapping in sub-steps a) and b) can be reversed. For example, in step vi). a, a frame of the first left image (L1) is overlaid on a frame of the second left image (L2) and in step vi). b, a frame of the first right image (R1) is overlaid on a frame of the second right image (R2);

In a particular embodiment, the user can choose the image to be overlaid during the process of sub-step vi) via a means of reversing the image overlay, e.g., a switch.

In a particular embodiment, in step vi), the synchronisation sub-steps a) and b) use an additional synchronisation signal included in the packet unpacked in step v) to verify the synchronisation of the previously unpacked frames.

The method of remote audio-visual assistance continues with step vii), reproducing on the second 3D image reproduction means located in the second module, the frame resulting from sub-step vi.a) and simultaneously the frame resulting from sub-step vi.b).

The second reproduction means play the stereoscopic 3D augmented reality image frames in the second module to a second user, who can view the image and in turn generate multimedia indications that will be captured by the second capture means to successively compose the stereoscopic 3D augmented reality image. The frames formed in step vi) are reproduced at the same frequency and resolution as the original, so that the second user experiences no loss of detail or image quality.

Advantageously, this reproduction system will always play back the image captured locally (by the second capture means), which increases the security of the system since in the event of a network outage, it will continue to play back the local image, even if the remote image is lost.

Next, step viii) of the method is executed, packing via the second image processing means of the second module, the two data signals generated in step iv) (L2, R2) with information on a second left image and a right image.

Advantageously, the handling of these signals (L2, R2) through the packing of step viii) allows the synchronisation of both signals to be maintained without the need to resort to other means of hardware/software synchronisation that could increase the latency of the system. In addition, this type of packing does not require any image processing, so the system hardware (processing means) is able to implement it with ultra-low latency.

In a particular embodiment, an additional signal is generated at packing step viii) and sent included in the generated packet to verify its synchronisation. In a preferred embodiment the synchronisation signal will be a timestamp, for example the signal may be a timestamp or clock timestamp.

Once step viii) of packing the images is completed, step ix) of the method begins, in which the process of sending from the second module to a first module each frame previously packed in step viii) of the method as a single progressive stereoscopic 3D image signal is carried out.

Each of the new frames sent in step viii) comprises information about the second left and right images packed in step viii).

In a particular embodiment of the invention, the video captured by the second capture means and played back by the second reproduction means is high quality 1080i video played back at a frequency of at least 50 Hz.

In a preferred embodiment of the invention, the video captured by the second capture means and played back by the second reproduction means is high quality 1080i video played back at a frequency that can alternate between 50 or 60Hz.

In a third inventive aspect, the *computer-implemented method for transmitting and combining multimedia information remotely over a computer network, the computer network comprising:*
*a first computer module comprising:*
   - *first stereoscopic 3D image capture means configured to generate two data signals (L1, R1) containing information about a first left image and a first right image, respectively;*
   - *first 3D image reproduction means;*
   - *first stereoscopic 3D image processing means;*
   - *first communication means configured to send and receive data either wired or wirelessly;*
*a second computer module comprising:*
   - *second stereoscopic 3D image capture means configured to generate two data signals (L2, R2) with information about a second left image and a second right image, respectively;*
   - *second 3D image reproduction means;*
   - *second stereoscopic 3D image processing means;*
   - *second communication means configured to send and receive data wired or wirelessly;*
*wherein the method comprises the method steps according to an embodiment of the first inventive aspect and the method steps according to an embodiment of the second inventive aspect.*

In this embodiment, the method comprises a first module and a second module performing steps i)-xii) of the method.

First, the first image capturing means generates a first image in step i), which is packed by the first image processing means in step ii) and sent from the first module to the second module in step iii).

The second capture means of the second module then generates a second image in step iv), after which in step v) it unpacks the image received by the second image processing means, the image sent from the first module in step iii) and subsequently composes in step vi) a stereoscopic 3D augmented reality image by overlaying the second image captured in step iv) on the image sent by the first module and unpacked by the second module in step v). This image will be reproduced by the second reproduction means of the second module in step vii).

The next step performed by the method is step viii), packing the second image processing means, which will be sent from the second module to the first module via the second communication means in step ix), via the second communication means.

Finally, the first module receives the image packed by the second module and unpacks it via the first image processing means in step x), then in step xi) the stereoscopic 3D augmented reality image is composed by overlaying the image received from the second module and the one captured by the first capturing means in step i) and reproduced, in step xii), on the first module by means of the first reproduction means.

Advantageously, this method establishes an iterative send-receive loop of image packets between a first module and a second module in such a way that it allows a first and a second user to interact in real time as if they were in the same room.

In an embodiment of the first inventive aspect, *the computer-implemented method for remotely transmitting and combining multimedia information in a computer network further comprises:*
*in step i), dividing every frame of the first left image and every frame of the first right image into a plurality of horizontal stripes grouped into two blocks each: a block A (LA1, RA1) comprising a first half of the horizontal stripes; and a block B (LB1, RB1) comprising a second half of the horizontal stripes;*
*in step ii), the following sub-steps are carried out:*
   - *packing block A of signal L1 (LA1) and block A of signal R1 (RA1) into a single frame, and*
   - *packing block B of signal L1 (LB1) and block B of signal R1 (RB1) into a single frame;*
*in step iii), sending the frame containing blocks A (LA1, RA1), and immediately after the frame containing blocks B (LB1, RB1), previously packed in step ii), at twice the frequency of the original images;*
*in step x), unpacking is carried out in the following sub-steps:*
   - *unpacking the frame resulting from packing blocks A (LA2, RA2) in step viii),*
   - *unpacking the frame resulting from packing blocks B (LB2, RB2) in step viii), and*
   - *combining LA2 and LB2 to get L2 and combining RA2 and RB2 to get R2.*

In one embodiment of the second inventive aspect, *the computer-implemented method for remotely transmitting and combining multimedia information in a computer network further comprises:*
*in step iv), dividing each frame of the second left image and each frame of the second right image into a plurality of horizontal stripes grouped into two blocks each: a block A (LA2, RA2) comprising the first half of the horizontal stripes; and a block B (LB2, RB2) comprising the second half of the horizontal stripes;*
*in step v), unpacking is carried out in the following sub-steps:*
   - *unpacking the frame resulting from packing blocks A (LA1*, *RA1) in step ii),*
   - *unpacking the frame resulting from packing blocks B (LB1, RB1) in step ii), and*
   - *combining LA1 and LB1 to get L1 and combining RA1 and RB1 to get R1;*
*in step viii), the following sub-steps are carried out:*
   - *packing block A of signal L2 (LA2) and block A of signal R2 (RA2) into a single frame, and*
   - *packing block B of the L2 signal (LB2) and block B of the R2 signal (RB2) into a single frame;*
*in step ix), send the frame containing blocks A (LA2, RA2), and*
*immediately after the frame containing blocks B (LB2, RB2), previously packed in step viii), at twice the frequency of the original images.*

In one embodiment of the third inventive aspect, *the computer-implemented method for remotely transmitting and combining multimedia information in a computer network further comprises:*
*in step i), dividing every frame of the first left image and every frame of the first right image into a plurality of horizontal stripes grouped into two blocks each: a block A (LA1, RA1) comprising a first half of the horizontal stripes; and a block B (LB1, RB1) comprising a second half of the horizontal stripes;*
*in step ii), the following sub-steps are carried out:*
   - *packing block A of signal L1 (LA1) and block A of signal R1 (RA1) into a single frame, and*
   - *packing B block of signal L1 (LB1) and block B of signal R1 (RB1) into a single frame;*
*in step iii), sending the frame containing blocks A (LA1, RA1), and immediately after the frame containing blocks B (LB1, RB1), previously packed in step ii), at twice the frequency of the original images;*
*in step iv), dividing each frame of the second left image and each frame of the second right image into a plurality of horizontal stripes grouped into two blocks each: a block A (LA2, RA2) comprising the first half of the horizontal stripes; and a block B (LB2, RB2) comprising the second half of the horizontal stripes;*
*in step v), unpacking is carried out in the following sub-steps:*
   - *unpacking the frame resulting from packing blocks A (LA1, RA1) in step ii),*
   - *unpacking the frame resulting from packing blocks B (LB1, RB1) in step ii), and*
   - *combining LA1 and LB1 to get L1 and combining RA1 and RB1 to get R1;*
*in step viii), the following sub-steps are carried out:*
   - *packing block A of signal L2 (LA2) and block A of signal R2 (RA2) into a single frame, and*
   - *packing block B of the L2 signal (LB2) and block B of the R2 signal (RB2) into a single frame;*
*in step ix), sending the frame containing blocks A (LA2, RA2), and immediately after the frame containing the blocks B (LB2, RB2), previously packed in step viii), at twice the frequency of the original images;*
*in step x), unpacking is carried out in the following sub-steps:*
   - *unpacking the frame resulting from packing blocks A (LA2, RA2) in step viii),*
   - *unpacking the frame resulting from packing blocks B (LB2, RB2) in step viii), and*
   - *combining LA2 and LB2 to get L2 and combining RA2 and RB2 to get R2.*

In this embodiment, in step i) each of the frames generated by the first image capturing means is further divided into a plurality of horizontal strips. The first left image comprises a plurality of horizontal stripes, divided into a block A (LA1), comprising the first half of the horizontal stripes and a block B (LB1) comprising the second half of the horizontal stripes. In turn, the first right image also comprises a plurality of horizontal stripes divided into a block A (RA1), comprising the first half of the horizontal stripes, and a block B (RB1), comprising the second half of the horizontal stripes.

In a particular embodiment, the number of horizontal lines into which the first left image (L1) and the first right image (R1) are divided is two, an upper stripe (LA1, RA1) and a lower stripe (LB1, RB1).

In step ii), additionally the sub-steps of: packing block A (LA1) of signal L1 and block A (RA1) of signal R1 into a single frame; and packing block B (LB1) of signal L1 and block B of signal R1 (RB1) are carried out. As a result of these sub-steps, a frame is created comprising the first half of the horizontal lines of the first left LA1 and right RA1 images; and a frame comprising the second half of the horizontal lines of the left LB1 and right RB1 images.

Advantageously, in packing step ii), latency is reduced as there is no transformation of the left and right images (e.g. compression), but a simple selection operation is performed. In conventional 3D packing processes, processes such as vertical or horizontal scaling are performed, which introduce significant latency into the process.

In step iii) the frames resulting from step ii) above are sent. First of all, the frame resulting from packing blocks A (LA1, RA1) of the first left and right images is sent, and immediately after, the frame resulting from packing blocks B (LB1, RB1) of the first left and right images is sent. Each of the packed frames is sent as a single progressive stereoscopic 3D image signal, at twice the frequency of the original images.

In step iv), each of the frames generated by the second image capturing means is further divided into a plurality of horizontal strips. The second left image comprises a plurality of horizontal stripes, divided into a block A (LA2), comprising the first half of the horizontal stripes and a block B (LB2) comprising the second half of the horizontal stripes. In turn, the second right image also comprises a plurality of horizontal stripes divided into a block A (RA2), comprising the first half of the horizontal stripes, and a block B (RB2), comprising the second half of the horizontal stripes.

In a particular embodiment, the number of horizontal lines into which the second left image (L2) and the second right image (R2) are divided is two, an upper stripe (LA2, RA2) and a lower stripe (LB2, RB2).

In step v) the unpacking additionally includes the sub-steps of: unpacking the frame resulting from packing blocks A (LA1, RA1) in step ii); unpacking the frame resulting from packing blocks B (LB1, RB1) in step ii); and combining LA1 and LB1 to obtain L1 and combining RA1 and RB1 to obtain R1.

In this step, each of the received frames is unpacked as a single 3D progressive image signal, unpacked, and combined to obtain the two signals L1 and R1 with information on the first left and right images previously captured, packed, and sent by the first module. The frame resulting from packing blocks A (LA1 and RA1) and the frame resulting from packing blocks B (LB1 and RB1) are decomposed into their two initial signals, leaving on the one hand the complete signal (frame) with information about the first left image L1 (LA1 and LB1) and on the other hand the signal with the complete information about the first right image R1 (RA1 and RB1) captured by the first image capture means.

In step viii), the following sub-steps are carried out: packing block A (LA2) of signal L2 and block A (RA2) of signal R2 into a single frame; and packing block B (LB2) of signal L2 and block B of signal R2 (RB2) are carried out. As a result of these sub-steps, a frame is formed comprising the first half of the horizontal lines of the second left LA2 and right RA2 images; and a frame comprising the second half of the horizontal lines of the second left LB2 and right RB2 images.

In step ix) the frames resulting from step viii) above are sent. First of all, the frame resulting from packing blocks A (LA2, RA2) of the second left and right images is sent, and immediately after, the frame resulting from packing blocks B (LB2, RB2) of the second left and right images is sent. Each of the packed frames is sent as a single progressive stereoscopic 3D image signal, at twice the frequency of the original images.

In step x) the unpacking additionally includes carrying out the following sub-steps: unpacking the frame resulting from packing blocks A (LA2, RA2) in step viii); unpacking the frame resulting from packing blocks B (LB2, RB2) in step viii); and combining LA2 and LB2 to obtain L2 and combining RA2 and RB2 to obtain R2.

In this step of the embodiment, each of the received frames is unpacked as a single 3D progressive image signal, unpacked, and combined to obtain the two signals L2 and R2 with information about the first left and right images previously captured, packed, and sent by the second module. The frame resulting from packing blocks A (LA2 and RA2) and the frame resulting from packing blocks B (LB2 and RB2) are decomposed into their two initial signals, leaving on the one hand the complete signal (frame) with information about the second left image L2 (LA2 and LB2) and on the other hand the signal with the complete information about the second right image R2 (RA2 and RB2) captured by the second image capture means.

Advantageously, this embodiment allows the left and right frames to be split into a plurality of horizontal lines and then simultaneously packed into packets that include horizontal lines from the same block of the left and right frames and then from the second block B of the left and right frames to be sent sequentially as a single frame, minimising latency and allowing them to be unpacked and displayed without loss of quality or information in the target module.

In an embodiment of the first inventive aspect, *the computer-implemented method for remotely transmitting and combining multimedia information in a computer network further comprises:*
*in step ii), packing the signals captured in step i) into a single frame that combines a full frame of the left image L1 with a full frame of the right image R1 to be sent sequentially;*
*in step iii), sending the result of packing the image in step ii), where the image is sent at twice the frequency of the original images;*
*in step x), unpacking the sequence of sequentially packed frames in step viii).*

In one embodiment of the second inventive aspect, *the computer-implemented method for remotely transmitting and combining multimedia information in a computer network further comprises:*
*in step v), unpacking the sequence of sequentially packed frames in step ii);*
*in step viii), packing the signals captured in step iv) into a single frame that combines a full frame of L2 with a full frame of R2 to be sent sequentially;*
*in step ix), sending the result of packing the image in step viii), where the image is sent at twice the frequency of the original images.*

In one embodiment of the third inventive aspect, *the computer-implemented method for transmitting and combining multimedia information remotely over a computer network further comprises in step ii), packing the signals captured in step i), into a single frame combining a full frame of the left image L1 with another full frame of the right image R1 to be sent sequentially;*
*in step iii), sending the result of packing the image in step ii), where the image is sent at twice the frequency of the original images;*
*in step v), unpacking the sequence of sequentially packed frames in step ii);*
*in step viii), packing the signals captured in step iv) into a single frame that combines a full frame of L2 with a full frame of R2 to be sent sequentially;*
*in step ix), sending the result of packing the image in step viii), where the image is sent at twice the frequency of the original images;*
*in step x), unpacking the sequence of sequentially packed frames in step viii).*

In this embodiment, the first processing means carry out in step ii) a sequential packing in which the images generated by the first capturing means in step i) are alternated by arranging a first left image and immediately thereafter a first right image, and so on creating a constant sequence.

In step iii), the result of packing the image in step ii) is sent via the first means of the first module. In this step, the image sequence is sent to the remote module at twice the frequency of the original images.

In step v), where the second image processing means unpacks the sequence of frames sequentially packed in step ii), the two independent captured signals containing information from the first left image L1 and the first right image R1 are obtained. This process will be repeated successively for the whole sequence of frames.

In packing step viii), the second image processing means carry out sequential packing in which the images generated by the second capture means in step iv) are alternated by arranging a second left image and immediately thereafter a second right image, and so on creating a constant sequence

In this embodiment, in step ix), as in step iii), the result of packing the image in step viii) is sent via the second means of the second module. In this step, the image sequence is sent to the remote module at twice the frequency of the original images.

In step x) of this embodiment, unpacking is carried out by the first image processing means of the first module of the sequence of frames packed in step viii) to obtain the two captured signals with information of the second left image L2 and the second right image R2. This process will be repeated successively for the whole sequence of frames.

Advantageously, in this embodiment, the frames are processed sequentially, forming a frame of full frames in which a full frame of the left image and a full frame of the right image are successively alternated and then sent at twice the original frequency. This process simplifies the image packing and unpacking process, saving computational power and processing time, thus reducing latency in the phases of packing, sending, and unpacking the image between two remote modules.

In an embodiment of the first inventive aspect, *the computer-implemented method for remotely transmitting and combining multimedia information in a computer network further comprises:*
*in step ii), packing the signals captured in step i) two by two into a single frame, of larger capacity than the originals: an L1 frame with an R1 frame occupying only half the capacity of the new frame;*
*in step x), unpacking the frame resulting from packing frame L2 and frame R2 in step viii).*

In one embodiment of the second inventive aspect, *the computer-implemented method for remotely transmitting and combining multimedia information in a computer network further comprises:*
*in step v), unpacking the frame resulting from packing frame L1 and frame R1 in step ii);*
*in step viii), packing the signals captured in step iv) two by two into a single frame of larger capacity than the originals: an L2 frame with an R2 frame occupying only half the capacity of the new frame.*

In one embodiment of the third inventive aspect, *the computer-implemented method for remotely transmitting and combining multimedia information in a computer network further comprises:*
*in step ii), packing the signals captured in step i) two by two into a single frame, of larger capacity than the originals: an L1 frame with an R1 frame occupying only half the capacity of the new frame;*
*in step v), unpacking the frame resulting from packing frame L1 and frame R1 in step ii);*
*in step viii), packing the signals captured in step iv) two by two into a single frame of larger capacity than the originals: an L2 frame with an R2 frame occupying only half the capacity of the new frame;*
*in step x), unpacking the frame resulting from packing frame L2 and frame R2 in step viii).*

In this embodiment, step ii) involves the packing, by the first image processing means, of the signals captured in step i). In this step the images are packed in pairs: one frame of the first left image L1, with one frame of the first right image R1, into a single frame, of larger capacity than the original frames.

In a preferred embodiment, the images are packed two by two: a first left image L1 and a first right image R1 in a single UHD format frame, with 4 times the capacity of the original frame.

In step v), the unpacking, by means of the second image processing means, of the frame resulting from packing the images in step ii) is carried out. This step results in the decomposition of a single frame of larger capacity than the original into the two image signals or frames generated in step i): a first left image L1 and a first right image R1.

In step viii), the signals captured in step iv) are packed by the second image processing means. In this step, the images are packed in pairs: one frame of the second left image L2, with one frame of the second right image R2, into a single frame, of larger capacity than the original frames.

In a preferred embodiment, the images are packed two by two: a second left image L2 and a second right image R2 in a single UHD format frame, with 4 times the capacity of the original frame.

In step x), the unpacking, by means of the first image processing means, of the frame resulting from packing the images in step viii) is carried out. This step results in the decomposition of a single frame of larger capacity than the original into the two image signals or frames generated in step iv): a second left image L2 and a second right image R2.

Advantageously, in this embodiment, the process of packing, sending, and unpacking a frame of larger capacity than the original is carried out, allowing several frames to be packed inside it. In addition, packing sub-steps ii) and viii) are produced in parallel, reducing the time spent in the process.

In a preferred embodiment, in steps ii) and viii) the first and second image processing means pack the signals generated in steps i) and iv) respectively resulting in a UHD frame with 4 times the capacity of an original frame. Advantageously, this feature initially allows the signals from steps i) and iv), a left and a right image in each UHD frame, to be packed two by two, leaving free space in the frame to accommodate higher quality frames in the event of an increase in the quality of the signals originally generated in these steps. In addition, the form of packing could also be altered if the method requires it, for example by packing 4 original signals or frames into a single UHD frame, so that two first left frames L1.1 and L1.2 and two first right images R1.1 and R1.2 can be packed; other examples of alternative ways of packing could be: packing whole frames captured natively in UHD format, or even a first half frame L1 and a first half frame R1 of UHD format frames.

In an embodiment of the first inventive aspect of the invention, *the computer-implemented method for transmitting and combining multimedia information remotely in a computer network further comprises:*
- *sub-step xi.a) further comprises applying (151.1) a transparency effect, preferably the "luma key" technique, to the frame of the second left image (L2) that is overlaid on the frame of the first left image (L 1); and*
- *sub-step xi.b) further comprises applying (153.1) a transparency effect, preferably the "luma key" technique, to the frame of the second right image (R2) which is overlaid on the frame of the first right image (R1).*

In an embodiment of the second inventive aspect of the invention, *the computer-implemented method for transmitting and combining multimedia information remotely in a computer network further comprises:*
- *sub-step vi.a) further comprises applying a transparency effect, preferably the "luma key" technique, to the frame of the second left image (L2) which is overlaid on the frame of the first left image (L1);*
- *sub-step vi.b) further comprises applying a transparency effect, preferably the "luma key" technique, to the frame of the second right image (R2) which is overlaid on the frame of the first right image (R1).*

In an embodiment of the third inventive aspect of the invention, *the method implemented*
*for the transmission and combination of multimedia information in a computer-assisted manner*
*remote access on a computer network also comprises:*
   - *sub-step vi.a) further comprises applying a transparency effect, preferably the "luma key" technique, to the frame of the second left image (L2) which is overlaid on the frame of the first left image (L1);*
   - *sub-step vi.b) further comprises applying a transparency effect, preferably the "luma key" technique, to the frame of the second right image (R2) which is overlaid on the frame of the first right image (R1);*
   - *sub-step xi.a) further comprises applying a transparency effect, preferably the "luma key" technique, to the frame of the second left image (L2) that is overlaid on the frame of the first left image (L1); and*
   - *sub-step xi.b) further comprises applying a transparency effect, preferably the "luma key" technique, to the frame of the second right image (R2) which is overlaid on the frame of the first right image (R1).*

In this embodiment, steps vi) and xi) of the method consist of compositing by means of the second processing means and the first processing means respectively an augmented stereoscopic 3D image by overlaying the frames captured in steps iv) and i) with the frames unpacked in steps v) and x) respectively.

In this particular embodiment, sub-steps vi.a), vi.b), xi.a) and xi.b) in addition to comprising synchronising and overlaying a frame of the first left and right images with a frame of the second left and right images as detailed in said method steps, also comprise applying a transparency effect on the second images such that unwanted parts of the image, such as the background, are removed in order to overlay the relevant information of the second images on the first images.

Thus, in sub-steps vi.a), vi.b), xi.a) and xi.b), the "merging" of both image layers will be carried out by overlaying second images on the first images, from which unwanted or irrelevant parts have been removed. This effect is achieved by applying the "Luma Key" technique, also known as "Chroma key by luminance", which consists of eliminating all the information that is captured in the image with a colour with an RGB scale value which is close to black. In other words, a contrast is established in the image between the parts with lighter colours and the parts with darker colours, and a threshold of darkness is set at which these parts of the image will be considered transparent.

Advantageously, the luma key process is mathematically very simple, so the system hardware suffers no latency when applying it.

In an embodiment of the first inventive aspect of the invention, *the computer-implemented method for transmitting and combining multimedia information remotely in a computer network further comprises:*
*sub-steps xi.a) and xi.b) include colouring the overlay image.*

In an embodiment of the second inventive aspect of the invention, *the computer-implemented method for transmitting and combining multimedia information remotely over a computer network further comprises: sub-steps vi.a) and vi.b) include colouring the overlay image.*

In an embodiment of the third inventive aspect of the invention, *the computer-implemented method for transmitting and combining multimedia information remotely in a computer network further comprises:*
*sub-steps vi.a), vi.b), xi.a) and xi.b) include colour the overlay image.*

In this embodiment, in sub-steps vi.a), vi.b), xi.a) and xi.b) a colouring of the image overlaid on the stereoscopic 3D augmented image composition is carried out. This process can be activated or deactivated at the user's discretion in each of the modules. In addition, it will be possible to choose the colour in which the overlay image will be coloured, preferably a colour that makes the image easily identifiable in the 3D environment.

Advantageously, the colouring of the overlay image improves the flow of indications between users of the remote modules, as it makes it much quicker for the user to distinguish one image layer from the other, for example the real instruments with which an operation is performed from the virtual instruments sent by the mentor with the audiovisual indications.

In an embodiment of the first inventive aspect, *the computer-implemented method for remotely transmitting and combining multimedia information in a computer network further comprises: step xi), further comprising:*
*c) adjusting (155) the convergence of the frame obtained in sub-step xi.a);*
*d) adjusting (156) convergence of the frame obtained in sub-step xi.b).*

In an embodiment of the second inventive aspect of the invention, *the computer-implemented method for transmitting and combining multimedia information remotely in a computer network further comprises: step vi), further comprising:*
*c) adjusting (255) the convergence of the frame obtained in sub-step via);*
*d) adjusting (256) the convergence of the frame obtained in sub-step vi.b);*

In an embodiment of the third inventive aspect of the invention, *the computer-implemented method for transmitting and combining multimedia information remotely in a computer network further comprises:*
- *step vi), further comprises:*
   *c) adjusting (255) the convergence of the frame obtained in sub-step vi.a);*
   *d) adjusting (256) the convergence of the frame obtained in sub-step*
*vi.b); and step xi), further comprising the following sub-steps:*
*c) adjusting (155) the convergence of the frame obtained in the sub-step*
   *xi.a);*
*d) adjusting (156) the convergence of the frame obtained in sub-step xi.b).*

In one embodiment of the invention, steps vi) and xi), consisting of forming the second and first image processing means respectively, a stereoscopic 3D augmented reality image, comprise adjusting the convergence of the frames obtained in sub-steps vi.a), vi.b) and xi.a), xi.b).

Each frame generated in steps vi.a), vi.b) and xi.a), xi.b) in the manner described in previous steps, adjusts the convergence of the images in such a way that both images coincide as if they were taking place in the same space in real time.

Advantageously, this embodiment allows both a first user viewing the stereoscopic 3D augmented reality image reproduced on a first module, and a second user viewing the stereoscopic 3D augmented reality image on a second module, to perceive the activities captured by the first and second capture means as taking place simultaneously and at the same location, thus allowing both users to collaborate in real time.

In a particular embodiment, the invention comprises an automatic convergence adjustment mode.

In a particular embodiment, the invention comprises a manual convergence adjustment mode.

In a particular embodiment, the invention will have both automatic and manual convergence adjustment modes and can be toggled between them at the user's choice.

In an embodiment of the first inventive aspect, *the computer-implemented method for remotely transmitting and combining multimedia information in a computer network further comprises:*
*blocks A (LA1-RA1, LA2-RA2) and blocks B (LB1-RB1, LB2-RB2) packed in step ii) are packed in an over-under format.*

In an embodiment of the second inventive aspect of the invention, *the computer-implemented method for transmitting and combining multimedia information remotely in a computer network further comprises:*
*blocks A (LA1-RA1, LA2-RA2) and blocks B (LB1-RB1, LB2-RB2) packed in step viii) are packed in an over-under format.*

In an embodiment of the third inventive aspect of the invention, *the computer-implemented method for transmitting and combining multimedia information remotely in a computer network further comprises:*
*blocks A (LA1-RA1, LA2-RA2) and blocks B (LB1-RB1, LB2-RB2) packed, respectively, in steps ii) and viii) are packed in an over-under format.*

In one embodiment of the invention, in steps ii) and viii), consisting of packing the formed frames with the even fields of the first image LA1-RA1 and the second image LA2-RA2 and the odd fields of the first image LB1-RB1 and the second image LB2-RB2, these frames are packed in an over- under format, i.e. one on top of the other.

In an embodiment of the first inventive aspect, *the computer-implemented method for remotely transmitting and combining multimedia information in a computer network further comprises:*
*the first module comprises initial audio capture and reproduction facilities; and the method further comprises the steps of:*
- *sending audio recorded by the first means of audio capture and reproduction, via the first means of communication, from the first module to the second module.*
In one embodiment of the second inventive aspect of the invention, *the computer-implemented method for transmitting and combining multimedia information remotely over a computer network further comprises: the second module comprises second audio capture and reproduction means; and and the method further comprises the steps of:*
- *sending audio recorded by the second audio capture and reproduction means, via the second means, from the second module to the first module.*

In an embodiment of the third inventive aspect of the invention, *the computer-implemented method for transmitting and combining multimedia information remotely in a computer network further comprises:*
- *the first module comprises initial audio capture and reproduction facilities;*
- *the second module comprises second audio capture and reproduction means; and*
*wherein the method further comprises the steps of:*
- *sending audio recorded by the first means of audio capture and reproduction, via the first means of communication, from the first module to the second module; and*/*or*
- *sending audio recorded by the second audio capture and reproduction means, via the second means, from the second module to the first module.*

In one embodiment of the invention, the first and/or the second module further comprise audio capture and reproduction means. The method further comprises the steps of sending audio recorded by the first audio capture and reproduction means, via the first communication means, to a second module and sending audio recorded by the first audio capture and reproduction means, via the second communication means, to a first module.

Advantageously this embodiment allows that, in addition to image, the method of transmitting and combining multimedia information remotely can share audio between the first module and the second module, so that a first user and a second user can interact in real time, for example by sending questions by a first user in the role of an apprentice to a second user in the role of a mentor; and sending by a second user in the role of a mentor to a first user in the role of an apprentice the answers to those questions or indications necessary to correctly perform the activity performed by the first user.

In one embodiment, in *a computer-implemented method for transmitting and combining multimedia information remotely over a computer network:*
- *steps iii), v) and vi) are carried out simultaneously; and*/*or*
- *steps ix), x) and xi) are carried out simultaneously.*

In one embodiment of the invention, step iii) sending the result of packing the signals generated in a first module of a first module to a second module; step v) unpacking the signals received in the second module; and step vi) composing the stereoscopic 3D augmented image in the second module are performed simultaneously.

This embodiment allows the parallelisation of certain tasks in the method to reduce process time and communication latency.

In one embodiment of the invention, step ix) in which the result of packing the generated signals from a second module is sent to a first module; step x) in which the signals received in the first module are unpacked; and step vi) in which the stereoscopic 3D augmented image is composed in the first module, are performed simultaneously.

This embodiment allows the parallelisation of certain tasks in the method to reduce process time and communication latency.

In one embodiment, *in the computer-implemented method for transmitting and combining multimedia information remotely over a computer network, the first and*/*or second stereoscopic 3D image capture means comprise:*
- *at least two micro cameras configured to capture stereoscopic 3D image and to enable synchronisation of the stereoscopic 3D image by the first and*/*or second stereoscopic 3D image processing means; and*
- *means for attaching the said cameras to the first and*/*or second module configured to adjust the geometry of the two micro cameras to each other.*

In one embodiment, the first and or second stereoscopic 3D image capturing means comprise at least two micro cameras configured for stereoscopic 3D image capturing. Said micro cameras also allow the synchronisation of said image by means of the second processing means and are fixed to the first and/or second capturing means by means of fixing means configured to adjust the geometry of said micro cameras.

In one embodiment, the first image processing means of the first module receives a synchronisation signal from the second image processing means to synchronise the frames received from the second module with those generated in the first module and, in turn, the second image processing means of the second module receives a synchronisation signal from the second image processing means to synchronise the frames received from the first module with those generated in the second module.

Micro cameras allow capturing high quality stereoscopic 3D images, at a frequency of at least 24 Hz.

In a preferred embodiment, the micro cameras allow capturing high quality stereoscopic 3D images, at a frequency of 50Hz.

In one embodiment, the means of attachment comprises:
- a first portion in the shape of a quadrilateral, the first portion comprising a first sidewall and a second sidewall, a top edge, and a bottom edge;
- a second portion extending perpendicularly to the first sidewall of the first portion;
- a third portion extending perpendicularly to the second sidewall of the first portion, essentially the same shape and size as the second portion and arranged parallel to it;
- a fourth portion movably attached to the second portion and to the third portion and arranged parallel to the first portion and forming with the first, second, and third portions an enclosure substantially in the shape of an "O";
   wherein the fourth portion is adapted to slide along the second portion and third portion towards or away from the first portion so that two micro cameras are fixed inside the enclosure formed by the four portions.

In one embodiment the fixing means comprise a first portion in the form of a quadrilateral; a second portion extending perpendicularly to a first sidewall of the first portion; a third portion extending perpendicularly to a second sidewall of the first portion of essentially the same shape and size as the second portion and parallel thereto; and a fourth portion movably attached to the second portion and the third portion, arranged parallel to the first portion. These four portions form a substantially "O"-shaped enclosure. The fourth portion is adapted to slide over the second and third portions towards or away from the first portion so that the two micro cameras are fixed inside the "O"-shaped enclosure formed by the four portions described above.

Thanks to these fixing means, any type of camera or micro-camera capable of recording high-resolution stereoscopic 3D images at, at least, 24 Hz, can be fixed in an adjustable way to the first and/or second image capturing means of the invention.

In one embodiment, the fourth portion (4) of the communication means further comprises means adapted to adjust the geometry of the two micro cameras fixed inside the fixing means.

Advantageously, in this embodiment, the fourth portion comprises means adapted to adjust the geometry of the two micro cameras fixed inside the fixing means.

In one embodiment, the means adapted for adjusting the geometry of the two micro cameras further comprise a plurality of means adapted for adjusting the geometry of the two micro cameras fixed therein:
- two flanges formed by perforations or cuts made in the fourth portion of the attachment means;
- a hole drilled in each of the two flanges, each hole being configured to accommodate means of adjusting the attachment and yaw of the cameras;
- at least, two holes in the surface of the fourth portion outside the surface bounded by the perforations or cut-outs forming the two flanges, configured to accommodate means for adjusting the pitch of the cameras;
- at least one hole in the second portion configured to accommodate means for adjusting the roll of the cameras;
- at least, one hole in the third portion, configured to accommodate means for adjusting the roll of the cameras;
wherein the means of adjusting the attachment and yaw of the cameras are configured to jointly move the flanges as a linear translation depending on the direction of the torque applied to the screw, such that the axial translation of each flange moves the position of a micro camera, respectively, to lock and adjust its yaw; the means for adjusting the pitch of the cameras are configured to linearly displace the micro cameras to adjust their pitch; and the roll adjustment means are configured to linearly displace the micro cameras thus adjusting their roll.

In a particular embodiment, the means adapted to adjust the geometry of the micro cameras comprise two flanges formed by perforations or cuts made in the fourth portion of the fixing means, and a perforated hole in each of these flanges which is configured to accommodate a means of fixing and yawing the cameras, for example a screw. These means can be manually operated so that when they move, they move the flanges in a linear translation which in turn moves the position of the micro camera associated with each flange to adjust both the fixation and the yaw angle of the flange.

In addition, the means adapted for adjusting the geometry of the cameras comprise two holes drilled in the fourth portion, aligned on the same vertical axis as the holes drilled in the flanges and outside the surface of the flanges. These holes are adapted to accommodate a means of adjustment, e.g. through-hole elements such as screws, configured to adjust the pitch angle of the cameras.

The means adapted for adjusting the geometry of the cameras further comprise, at least, one hole in the second portion and one hole in the third portion, both configured to accommodate means for adjusting, for example, a through element such as a screw, the roll of the cameras.

Advantageously, this configuration of the adapted means to adjust the geometry of the cameras allows a good fixation of the cameras to the first and/or second modules as well as a manual and precise modification of the yaw, pitch and roll angles of each of the cameras independently, providing the system with greater flexibility when adjusting these values for a correct capture and visualisation of the images.

In one embodiment, the convergence adjustment carried out in sub-steps vi.c), vi.d), xi.c) and xi.d) is performed by adjusting the image values on the z-axis based on:
- the displayed 3D intensity, defined by the interaxial distance between cameras, optics used and distance to the lens; or
- the convergence for a defined point in the 3D image, the convergence being chosen from 3 possible values:
   ▪ zero convergence, defined at screen level;
   ▪ positive convergence, defined for positions inside the screen; or
   ▪ negative convergence, defined for off-screen positions.

Advantageously, this embodiment allows the image values to be adjusted in three dimensions along the z-axis, i.e. in depth. In this way, the values can be checked against each other so that the different layers of 3D augmented reality can be regulated reliably and efficiently.

Thanks to this configuration of the invention, it is possible to use it for collaboration in delicate tasks, such as surgery, between a first user and a second user who collaborate remotely and in real time with the roles of apprentice and mentor respectively.

In one embodiment, *the computer-implemented method for remotely transmitting and combining multimedia information in a computer network, the first and*/*or the second module comprise 3D augmented image convergence adjustment means, wherein said convergence adjustment means comprise two pedals configured to manually control the convergence of the 3D augmented image, such that the position of the pedals allows the depth of one image layer to be adjusted relative to the other.*

In a particular embodiment, the invention comprises an automatic convergence adjustment mode.

In a particular embodiment, the invention comprises a manual convergence adjustment mode, which will be performed by the user by means of pedals that will be operated with the feet, thus leaving the hands free to perform other actions.

In a particular embodiment, the invention will have both automatic and manual convergence adjustment modes by means of pedals, and it will be possible to switch between them at the user's choice.

Advantageously, the convergence adjustment means will allow software-based adjustment of the convergence of the images, either manually or automatically, so as to achieve high accuracy in the overlay of the stereoscopic 3D augmented image, enabling remote users to collaborate in tasks requiring high accuracy in the transmission or reception of multimedia indications.

In a fourth inventive aspect, the invention provides a computer *network* comprising a first computer module configured to carry out steps i)-iii) and x)-xii) according to embodiments of the invention.

In this embodiment, there is a computer network comprising a first computer module that performs the steps of: i) generating a 3D image, ii) packing the 3D image, iii) sending the packed image to a remote module, x) unpacking the image received from a remote module, xi) composing a 3D augmented reality stereoscopic image with the captured image and the received and unpacked image, and finally xii) reproducing the 3D augmented reality stereoscopic image.

In a fifth inventive aspect, the invention provides a computer *network* comprising a second computer module configured to carry out steps iv)-ix) according to embodiments of the invention.

In this embodiment, there is a computer network comprising a second computer module that performs the steps of: iv) generating a 3D image, v) packing the 3D image, vi) sending the packed image to a remote module, vii) unpacking the image received from a remote module, viii) composing a stereoscopic 3D augmented reality image with the captured image and the received and unpacked image, and finally ix) reproducing the stereoscopic 3D augmented reality image.

In a sixth inventive aspect, the invention provides a computer *network* comprising a first computer module and a second computer module, wherein the first module is configured to carry out steps i)-iii) and x)-xii) according to embodiments of the invention, and the second module is configured to carry out steps iv)-ix) according to embodiments of the invention.

In this embodiment, there are two computer modules, a first module and a second module, configured to carry out the method described above, thanks to which multimedia information can be exchanged between remote modules in real time with ultra-low latency and without loss of image quality.

In a seventh inventive aspect, the invention provides *a computer program comprising instructions which, when the program is executed by a computer equipment, causes the computer equipment to carry out the steps of a method according to an embodiment according to the first inventive aspect, the second inventive aspect or the third inventive aspect.*

In the eighth inventive aspect, *a computer-readable medium is defined comprising instructions which, when executed by a computer, cause the computer to carry out the steps of a method according to an embodiment, in accordance with the first inventive aspect, the second inventive aspect or the third inventive aspect.*

### DESCRIPTION OF THE DRAWINGS

These and other features and advantages of the invention will become clearer from the following detailed description of a preferred embodiment, given by way of illustrative and non-limiting example only, with reference to the accompanying figures.
- Figure 1: This figure shows a schematic example of the method of transmission and combination of multimedia information remotely according to an embodiment of the present invention in which a first module and a second module are provided.
- Figures 2A-2D: These figures illustrate schematically several examples of embodiment of the method with alternatives for packing steps ii) and viii); and unpacking steps v) and x) of frames for sending and after receipt in the first and second modules of the invention.
- Figure 3: This figure shows a schematic illustration of an example of the first or second module adapted to carry out the steps of the method of transmitting and combining multimedia information remotely, according to an embodiment of the present invention.
- Figures 4 and 5: These figures show an example of an embodiment of the means of attachment of the first and/or second stereoscopic 3D image capturing means according to an embodiment of the present invention.

### DETAILED DESCRIPTION OF THE INVENTION

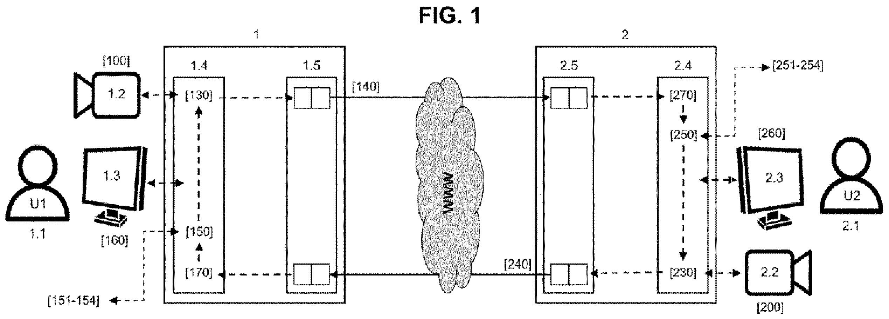

Figure 1 shows a schematic illustrative example of the method of remotely transmitting and combining multimedia information according to one embodiment. In particular, Figure 1 shows, on the left, a first user (1.1) interacting with a first module (1). The first module (1) comprises first stereoscopic 3D image capture means (1.2), first stereoscopic 3D image reproduction means (1.3), first stereoscopic 3D image processing means (1.4), and first communication means (1.5) configured to send and receive data either wired or wirelessly.

In turn, on the right side of the figure, a second user (2.1) can be seen interacting with a second module (2). The second module comprises second stereoscopic 3D image capture means (2.2), second 3D image reproduction means (2.3), second stereoscopic 3D image processing means (2.4), and second communication means (2.5) configured to send and receive data wired or wirelessly.

In this schematic representation, the first user (1.1), as an example, will carry out a first activity with the role of apprentice and the second user (2.1) will carry out a second activity with the role of mentor, whose objective will be to offer support to the first user (1.1) in the development of the first activity.

Firstly, step i) of the method is executed, which consists of generating (100) by means of the first stereoscopic 3D image capturing means (1.2), two signals L1 and R1, containing information about a first image of the left channel and a first image of the right channel of the stereoscopic 3D image respectively. Each of these two signals is divided into a plurality of horizontal lines which in turn are grouped into a block A comprising a first half of the even horizontal stripes of each of the left LA1 and right RA1 channels and a block B comprising a second half of the horizontal stripes of each of the left LB1 and right RB1 channels.

This is followed by step ii) of the method, in which the process of packing (130), by means of the first processing means (1.4), the left signal block A LA1 and the right signal block A RA1 into a single frame; and the left signal block B LB1 and the right signal block B RB1 into a single frame.

Once the frames are packed, step iii) of the method is executed, which consists of sending (140), by means of the first means (1.5), the frame resulting from packing blocks A (LA1, RA1), and immediately afterwards the frame resulting from packing blocks B (LB1, RB1) at twice the frequency of the original images.

In this step, the previously packed frames are sent from the first module (1) where the first user (1.1) (apprentice) starts to perform the first action to the second module (2), so that the second user (2.1) (expert or mentor) can visualise the first action and collaborate with the first user. The sending is carried out by means of the first means of communication (1.5), which may be wired or wireless, and will reach the second module (2) where it will be received by the second means of communication (2.5). The modules (1, 2) may be in the same geographic location or in remote locations anywhere in the world.

Next, step iv) of the method is carried out, which consists of generating (200) by means of the second stereoscopic 3D image capturing means (2.2), two signals L2 and R2, containing information about a second image of the left channel and a second image of the right channel of the stereoscopic 3D image respectively. Each of these two signals is divided into a plurality of horizontal lines which in turn are grouped into a block A containing the first half of the horizontal stripes of each of the left channel LA2 and right channel RA2 and a block B containing the second half of the horizontal stripes of each of the left channel LB2 and right channel RB2.

In this step, the image of the second action performed by the second user (2.1) is captured so that they can collaborate with the first user (1.1) in real time in successive steps of the method.

In the next step v) of the method, the second processing means (2.4) performs the task of unpacking (270) the frames received in step ii) of the method, i.e. the frame resulting from packing (130) blocks A (LA1 and RA1) and the frame resulting from packing (130) blocks B (LB1 and RB1). In this way, the two left L1 and right R1 signals are obtained with the information on the first left and first right image captured by the first image capturing means (1.2) without any loss of quality or information in them.

The next step carried out in the method is step vi), which consists of forming (250), by means of the second processing means (2.4) a stereoscopic 3D augmented reality image by merging the frames captured in step iv) L2 and R2, with the frames obtained in step v) L1 and R1. This is accomplished by a process of synchronising (251) and overlaying (252) a frame of the second left image L2 with a frame of the first left image L1 (and then synchronising (253) and overlaying (254) a frame of the second right image R2 with a frame of the first right image R1.

Then, in step vii), the phase of reproducing (260) on the second 3D image reproduction means (2.3), the frames (250) formed in the previous step for display by the second user (2.1) is carried out. In this way, an augmented reality frame is formed (250) in the second module for each channel (left and right) of the stereoscopic 3D image, so that in step vii) its reproduction (260) takes place and the second user (2.1) can simultaneously observe the action carried out by the first user (1.1) in the first module (1) and the action that the second user is carrying out, so that both can collaborate in real time as if they were located in the same space.

The next step to be carried out is step viii) of the method, packing (230) by means of the second stereoscopic 3D image processing means (2.4), the left signal block A LA2 and the right signal block A RA2 into a single frame; and the left signal block B LB2 and the right signal block B RB2 into a single frame.

In this step, the generated image (200) is packed (230) in the second module (2), i.e. the one that collects the second action performed by the second user (2.1), so that it can be sent to the first module in successive phases of the method.

Once the frames have been packed (230), step ix) of the method is executed, which consists of sending (240), by means of the second communication means (2.5), the frame resulting from packing the blocks A (LA2, RA2), and immediately afterwards the frame resulting from packing the blocks B (LB2, RB2) at twice the original frequency.

In this step, the previously packed frames are sent from the second module (2), where the second user (2.1) (mentor) carries out a second action to collaborate with the first user (1.1) (apprentice), to the first module (1). In this way the first user (1.1) (apprentice) can visualise the second action and collaborate with the second user (2.1). The sending is carried out by means of the second means of communication (2.5), which may be wired or wireless, and will reach the first module (1) where it will be received by the first means of communication (1.5). The modules (1, 2) may be in the same geographic location or in remote locations anywhere in the world.

Next, in step x) of the method, the first processing means (1.4) performs the task of unpacking (170) the frames received in step ix) of the method, i.e., the frame resulting from packing (230) blocks A LA2 and RA2 and the frame resulting from packing (230) blocks B LB2 and RB2. In this way, the two left L2 and right R2 signals are obtained with the information on the second left and second right image captured by the second image capture means (2.2) without any loss of quality or information in them.

The next step carried out is step xi), which consists of forming (150), by means of the first processing means (1.4), a stereoscopic 3D augmented reality image by merging the frames captured in step i) L1 and R1, with the frames obtained in step x) L2 and R2. This process is carried out by a process consisting of synchronising (151) and overlaying (152) a frame of the first left image L1 with a frame of the second left image L2 and then synchronising (153) and overlaying (154) a frame of the first right image R1 with a frame of the second right image R2.

Next, in step xii), the phase of reproducing (160) on the first 3D image reproduction means (1.3) the frames (150) formed in the previous step for display by the first user (1.1) is carried out.

In this way, an augmented reality frame is formed (150) in the first module for each channel (left and right) of the stereoscopic 3D image, so that in step xii) its reproduction (160) takes place and the first user (1.1) can simultaneously observe the action carried out by the second user (2.1) in the second module and the action that the first user is carrying out, so that both can collaborate in real time as if they were located in the same space.

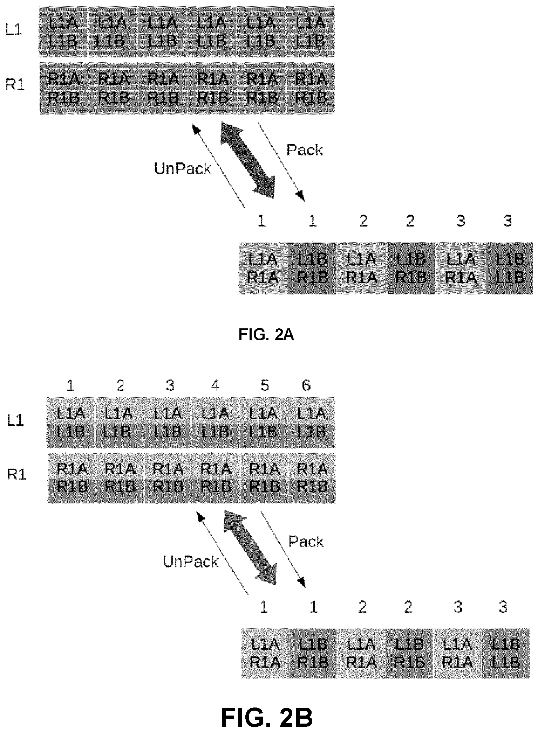

Figures 2A - 2D show several schematic examples in which the packing ii) and viii); and unpacking steps v) and x) of the method are carried out according to some of the particular embodiments of the invention.

Figure 2A shows an embodiment example in which the first left and right images L1 and R1 are divided into a plurality of horizontal lines, a first block A with the first half of the horizontal lines and a second block B with the second half of the horizontal lines. Then, in packing step ii), the lines of block A of the first left and right image are packed into one frame and the lines of block B of the first left and right image are packed into another frame. In unpacking step v) the reverse process will be carried out until the original images L1 and R1 are reached. In this particular embodiment, sending is carried out at twice the original frequency.

Figure 2B shows an example of a particular embodiment in which the packing and unpacking steps are carried out in a similar way to the present embodiment in figure 2A, except that the number of horizontal lines into which each image is divided is two. In this particular embodiment, sending is carried out at twice the original frequency.

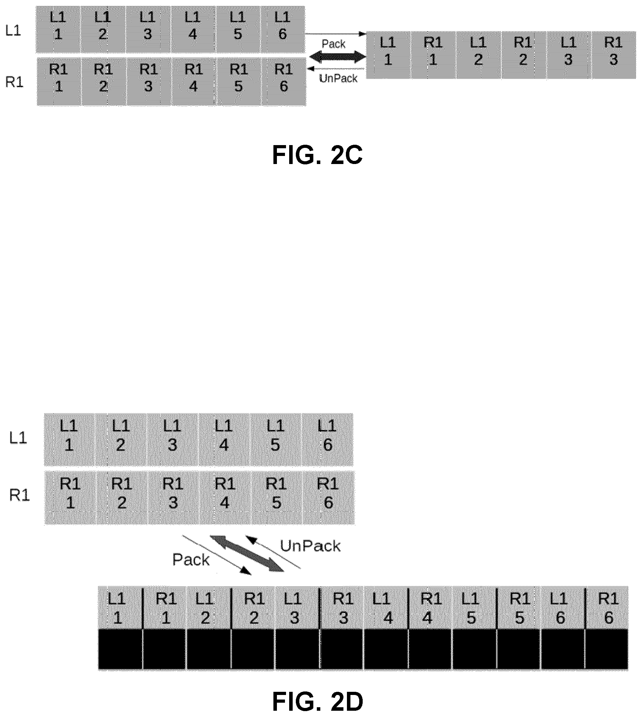

Figure 2C shows a schematic example of a particular embodiment in which the first left L1 and right L2 images are packed in step ii) of the method of the invention sequentially for sending in a frame alternating the frame of a first left image, then the frame of a first right image and so on, forming a continuous frame for sequential sending to a second remote module. In unpacking step v), the continuous sequence of frames packed in step ii) will be received and the reverse process will be carried out to arrive at the images originally generated in step i) of the method, as in all other embodiments, without loss of image quality or information contained therein. In this particular embodiment, both sending and receiving at the destination are carried out at twice the original frequency.

Figure 2D shows an example of a particular embodiment in which, in packing step ii), the first left L1 and right R1 images are packed in a frame format of higher capacity than the original frame. In this particular case, they are packed in a UHD format of 4 times the size of the original images, leaving free space in the packet that would allow if necessary to increase the size of the frames captured in step i) or even to pack these frames 4 by 4 instead of as originally done. In the unpacking step v), the reverse process is carried out, starting from the frame with the largest capacity and unpacking the two original frames L1 and R1. In this particular embodiment, the sending is carried out at the same frequency as the original.

Advantageously, the different examples of embodiment allow for greater flexibility in the method of the invention, allowing to reduce latency when necessary or to increase packet size if sending images with a larger amount of information is needed to carry out mentoring tasks with greater accuracy or when bandwidth is more limited.

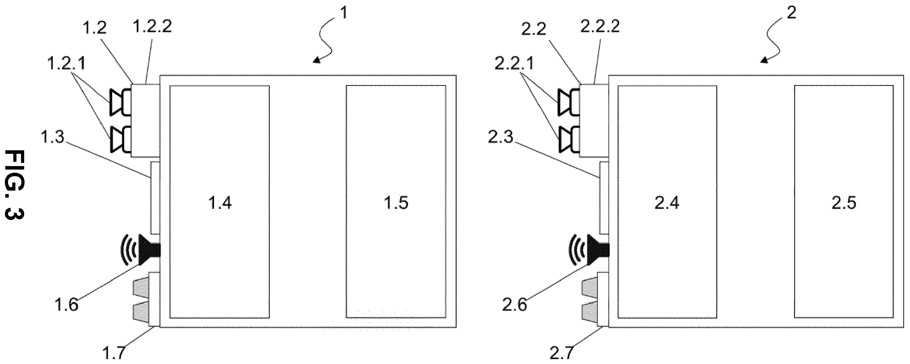

Figure 3 shows an illustrative example of one of the possible configurations of the hardware modules (1, 2) adapted to carry out the method of remotely transmitting and combining multimedia information.

In the module (1) shown on the left of the image, a stereoscopic 3D image capturing means (1.2) can be seen first.

In a particular embodiment, the capturing means (1.2) may be two micro cameras (1.2.1) capable of capturing high quality stereoscopic 3D image (1080i) having at least 24 Hz.

In a preferred embodiment, the capture means (1.2) may be two micro cameras capable of capturing high quality stereoscopic 3D image (1080i) having at least 50 Hz.

The capturing means (1.2) are fixed to the module (1) by means of fixing means (1.2.2).

In a particular embodiment, the fixing means (1.2.2) may comprise means adapted to adjust the geometry of the micro cameras.

The module (1) further comprises a means of reproducing a three-dimensional (3D) image (1.3). These means (1.3) allow the user (1.1) interacting with the module (1) to view the multimedia information captured and transmitted by the method of the invention.

Module (1) of the configuration example shown in Figure 3 also comprises stereoscopic 3D image processing means (1.4). These means (1.4) allow the image signals captured by the image capturing means (1.2) to be packed and unpacked, so that they can be sent with minimum latency allowing users to collaborate with each other in real time and so that the image sent does not lose quality or parts of the information captured therein.

In addition, the processing means (1.4) also allow merging images captured in the local module (1) with those received via the communication means (1.5) from a remote module (2), so that a stereoscopic 3D augmented reality image can be formed, in which the image captured in the local module (1) and the image captured in the remote module (2) can be displayed simultaneously in an overlaid manner.

The module (1) of this configuration example also comprises communication means (1.5) configured for sending and receiving data. These means can be wired or wireless. These means of communication (1.5) allow sending and receiving data with low latency, sufficient for collaboration between users (1.1, 2.1) of remote modules (1, 2) in real time as if they were in the same location.

In this configuration example of the module (1), the module (1) also comprises audio capture and reproduction means (1.6). This allows users (1.1, 2.1) collaborating using the invention to also use sound signals in addition to images.

Finally, the module (1) in Figure 3 further comprises image convergence adjustment means (1.7) configured to adjust the depth of 3D augmented reality images. These image convergence adjustment means (1.7) allow the images to be precisely positioned at a relative depth that allows any user (1.1, 2.1) viewing them to perceive the augmented reality 3D image as if both images were captured at the same location. This configuration has the advantage of allowing remote users to collaborate in activities requiring high precision, for example, in surgery.

In a particular embodiment, the image convergence adjustment means (1.7) may be foot pedals that allow the user to adjust the convergence of the 3D augmented reality image while their hands remain free for other actions.

In the module (2) shown on the left of the image, an analogous configuration to the one described above for module (1) can be observed.

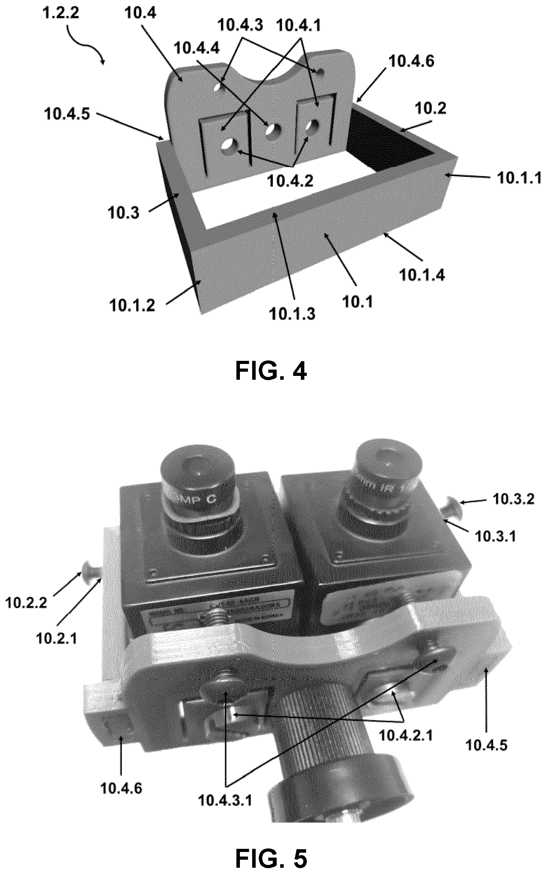

Figures 4A and 4B show a possible configuration of the fixing means 1.2.2, 2.2.2) used to fix the stereoscopic 3D image capturing means (1.2, 2.2) to the modules (1, 2).

The fixing means comprise a first portion (10.1) in the shape of a quadrilateral comprising a first sidewall (10.1.1), a second sidewall (10.1.2), an upper edge (10.1.3) and a lower edge (10.1.4); a second portion (10.2) extending perpendicularly to the first sidewall (10.1.1) of the first portion (10.1); a third portion (10.3) extending perpendicularly to the second sidewall (10.1.2) of the first portion (10.1.1) of essentially the same shape and size as the second portion and arranged parallel thereto; and a fourth portion (10.4) movably connected to the second (10.2) and third (10.3) portions by means of two slots (10.4.5, 10.4.6) adapted to allow, at least partially, the housing of the second and third portions (10.2, 10.3), the fourth portion (10.4) being arranged parallel to the first portion (10.1) and forming with the other three portions (10.1, 10.2 and 10.3) a closed rectangular enclosure.

The slots (10.4.5, 10.4.6) further allow the fourth portion (10.4) to slide relative to the second (10.2) and third (10.3) portions, moving towards or away from the first portion (10.1) so that the stereoscopic 3D image capturing means (1.2, 2.2), for example two high resolution micro cameras are fixed inside the enclosure formed by the four portions (10.1, 10.2, 10.3, 10.4).

Advantageously, the adjustable fixing means (1.2.2, 2.2.2) allow some freedom in choosing the stereoscopic 3D image capturing means (1.2, 2.2) comprising the module (1,2) hardware adapted to execute the method of transmitting and combining multimedia information remotely, as well as adjusting and/or removing them for easy replacement or repair.

This configuration of the fixing means (1.2.2) further comprises means adapted for adjusting the geometry of the capturing means.

In this particular embodiment, the means adapted for adjusting the geometry of the means of capture comprise two flanges (10.4.1) formed by perforations or cuts in the fourth portion (10.4) of the fixing means. Each of the flanges comprises a hole (10.4.2) configured to accommodate a screw (10.4.2.1). Each screw (10.4.2.1) is configured to move the flanges (10.4.1) together when screwed/unscrewed so as to shift the position of each of the capture means (1.2, 2.2), e.g. of each of the micro cameras, to adjust their attachment and yaw angle.

In addition, the means adapted for adjusting the geometry comprise two holes (10.4.3) drilled in the fourth portion (10.4), aligned on the same vertical axis as the holes (10.4.2) drilled in the flanges (10.4.1) and outside the surface of the flanges (10.4.1). These holes are adapted to accommodate a through-hole element (10.4.3.1), e.g. a screw, which serves to adjust the pitch angle of each of the cameras independently of each other.

The means adapted for adjusting the geometry further comprise a hole (10.4.4) 5 drilled in the fourth portion (10.4) configured to accommodate a through-hole element or fastening element for attaching the fixing means (1.2.2, 2.2.2) to the corresponding module (1,2).

Finally, the means adapted for adjusting the geometry of the cameras 10 also comprise, at least, one hole (10.2.1) in the second portion (10.2) and one hole (10.3.1) in the third portion (10.3), both configured to house one through element (10.2.2, 10.3.2), for example screws, adapted to adjust the roll angle of each of the cameras independently.

This configuration has the advantage of allowing the firm attachment of any type of camera to the first and second modules of the invention. In addition, manual adjustment of the geometry of the stereoscopic 3D image capturing means (1.2), e.g. high-resolution micro cameras, can also be carried out, which is accurate and sturdy.

## Claims

1. A Computer-implemented method for transmitting and combining multimedia information remotely over a computer network, the computer network comprising:
a first computer module (1), comprising:
• first stereoscopic 3D image capture means (1.2) configured to generate two data signals (L1, R1) containing information about a first left image and a first right image, respectively;
• first 3D image reproduction means (1.3);
• first stereoscopic 3D image processing means (1.4);
• first communication means (1.5) configured to send and receive data either wired or wirelessly;
wherein the method comprises the following steps:
i) generating (100), by means of the first stereoscopic 3D image capturing means (1.2), two data signals (L1, R1) containing information about a first captured left image and a first captured right image;
ii) packing (130), by means of the first image processing means (1.4) the signals captured in step i);
iii) sending (140) from the first module to a second module as a single progressive stereoscopic 3D image signal via the first communication means (1.5), the frame resulting from packing the image in step ii);
x) unpacking (170), by means of the first progressive stereoscopic 3D image processing means (1.4) the frames received as a single progressive stereoscopic 3D image signal from a second module, so as to obtain two signals (L2, R2) with information about a second left image and a second right image captured by a second image capturing means (2.2);
xi) forming (150), by means of the first stereoscopic 3D image processing means (1.4), an augmented stereoscopic 3D image by overlaying the frames unpacked in step x) L2 and R2, with the frames obtained in step i) L1 and R1, according to the following sub-steps:
a) synchronising (151) and overlaying (152) a frame of the second left image (L2) with a frame of the first left image (L1); and
b) synchronising (153) and overlaying (154) a frame of the second right image (R2) with a frame of the first right image (R1);
xii) reproducing (160), on the first reproduction means (1.3) of the 3D image, the frame resulting from sub-step xi.a) immediately followed by the frame resulting from sub-step xi.b).

2. A Computer-implemented method for transmitting and combining multimedia information remotely over a computer network, the computer network comprising:
a second computer module (2), comprising:
• second stereoscopic 3D image capture means (2.2) configured to generate two data signals (L2, R2) containing information about a second left image and a second right image, respectively,
• second 3D image reproduction means (2.3);
• second stereoscopic 3D image processing means (2.4);
• second communication means (2.5) configured to send and receive data either wired or wirelessly;
wherein the method comprises the following steps:
iv) generating (200), by means of the second stereoscopic 3D image capturing means (2.2), generate two data signals (L2, R2) containing information about a second captured left image and a second captured right image;
v) unpacking (270), via the second progressive stereoscopic 3D image processing means (2.4) the frames received as a single progressive stereoscopic 3D image signal from a first module, so as to obtain the two signals (L1, R1) with information about the first left image and the first right image captured by the first image capturing means;
vi) forming (250), by means of the second stereoscopic 3D image processing means (2.4), an augmented stereoscopic 3D image by overlaying the frames captured in step iv), L2, R2, with the frames obtained in step v), L1 and R1, according to the following sub-steps:
a) synchronising (251) and overlaying (252) a frame of the second left image (L2) with a frame of the first left image (L1); and
b) synchronising (253) and overlaying (254) a frame of the second right image (R2) with a frame of the first right image (R1);
vii) reproducing (260), on the second reproduction means (2.3) of the 3D image, the frame resulting from sub-step vi.a) and simultaneously the frame resulting from sub-step vi.b);
viii) packing (230), by means of the second stereoscopic 3D image processing means (2.4) the signals captured in step iv);
ix) sending (240) from the second module (2) to the first module (1) as a single progressive stereoscopic 3D image signal via the second communication means (2.5) the frame resulting from the packing in step viii).

3. A Computer-implemented method for transmitting and combining multimedia information remotely over a computer network, the computer network comprising:
a first computer module (1), comprising:
• first stereoscopic 3D image capture means (1.2) configured to generate two data signals (L1, R1) containing information about a first left image and a first right image, respectively;
• first 3D image reproduction means (1.3);
• first stereoscopic 3D image processing means(1.4);
• first communication means (1.5) configured to send and receive data either wired or wirelessly;
a second computer module (2), comprising:
• second stereoscopic 3D image capture means (2.2) configured to generate two data signals (L2, R2) containing information about a second left image and a second right image, respectively;
• second 3D image reproduction means (2.3);
• second stereoscopic 3D image processing means (2.4);
• second communication means (2.5) configured to send and receive data either wired or wirelessly;
wherein the method comprises the method steps according to claim 1 and the method steps according to claim 2.

4. A computer-implemented method for remotely transmitting and combining multimedia information in a computer network according to claim 1,2 or 3, wherein:
When it depends on claim 1:
in step i), dividing every frame of the first left image and every frame of the first right image into a plurality of horizontal stripes grouped into two blocks each: a block A (LA1, RA1) comprising a first half of the horizontal stripes; and a block B (LB1, RB1) comprising a second half of the horizontal stripes;
in step ii), the following sub-steps are carried out:
- packing block A of signal L1 (LA1) and block A of signal R1 (RA1) into a single frame, and
- packing block B of signal L1 (LB1) and block B of signal R1 (RB1) into a single frame;
in step iii), sending the frame containing blocks A (LA1, RA1), and immediately after the frame containing blocks B (LB1, RB1), previously packed in step ii), at twice the frequency of the original images;
in step x), unpacking is carried out in the following sub-steps:
unpacking the frame resulting from packing blocks A (LA2, RA2) in step viii),
unpacking the frame resulting from packing blocks B (LB2, RB2) in step viii), and
- combining LA2 and LB2 to get L2 and combining RA2 and RB2 to get R2;
When it depends on claim 2:
in step iv), dividing each frame of the second left image and each frame of the second right image into a plurality of horizontal stripes grouped into two blocks each: a block A (LA2, RA2) comprising the first half of the horizontal stripes; and a block B (LB2, RB2) comprising the second half of the horizontal stripes;
in step v), unpacking is carried out in the following sub-steps:
- unpacking the frame resulting from packing blocks A (LA1, RA1) in step ii),
- unpacking the frame resulting from packing blocks B (LB1, RB1) in step ii), and
- combining LA1 and LB1 to get L1 and combining RA1 and RB1 to get R1;
in step viii), the following sub-steps are carried out:
- packing block A of signal L2 (LA2) and block A of signal R2 (RA2) into a single frame, and
- packing block B of the L2 signal (LB2) and block B of the R2 signal (RB2) into a single frame;
in step ix), sending the frame containing blocks A (LA2, RA2), and immediately after the frame containing the blocks B (LB2, RB2), previously packed in step viii), at twice the frequency of the original images;
When it depends on claim 3:
in step i), dividing every frame of the first left image and every frame of the first right image into a plurality of horizontal stripes grouped into two blocks each: a block A (LA1, RA1) comprising a first half of the horizontal stripes; and a block B (LB1, RB1) comprising a second half of the horizontal stripes;
in step ii), the following sub-steps are carried out:
- packing block A of signal L1 (LA1) and block A of signal R1 (RA1) into a single frame, and
- packing block B of signal L1 (LB1) and block B of signal R1 (RB1) into a single frame;
in step iii), sending the frame containing blocks A (LA1, RA1), and immediately after the frame containing blocks B (LB1, RB1), previously packed in step ii), at twice the frequency of the original images;
in step iv), dividing each frame of the second left image and each frame of the second right image into a plurality of horizontal stripes grouped into two blocks each: a block A (LA2, RA2) comprising the first half of the horizontal stripes; and a block B (LB2, RB2) comprising the second half of the horizontal stripes;
in step v), unpacking is carried out in the following sub-steps:
- unpacking the frame resulting from packing blocks A (LA1, RA1) in step ii),
- unpacking the frame resulting from packing blocks B (LB1, RB1) in step ii), and
- combining LA1 and LB1 to get L1 and combining RA1 and RB1 to get R1;
in step viii), the following sub-steps are carried out:
- packing block A of signal L2 (LA2) and block A of signal R2 (RA2) into a single frame, and
- packing block B of the L2 signal (LB2) and block B of the R2 signal (RB2) into a single frame;
in step ix), sending the frame containing blocks A (LA2, RA2), and immediately after the frame containing the blocks B (LB2, RB2), previously packed in step viii), at twice the frequency of the original images;
in step x), unpacking is carried out in the following sub-steps:
- unpacking the frame resulting from packing blocks A (LA2, RA2) in step viii),
- unpacking the frame resulting from packing blocks B (LB2, RB2) in step viii), and
- combining LA2 and LB2 to get L2 and combining RA2 and RB2 to get R2;

5. A computer-implemented method for remotely transmitting and combining multimedia information in a computer network according to claim 1, 2 or 3, wherein:
when it depends on claim 1:
in step ii), packing the signals captured in step i) into a single frame that combines a full frame of the left image L1 with a full frame of the right image R1 to be sent sequentially;
in step iii), sending the result of packing the image in step ii), where the image is sent at twice the frequency of the original images;
in step x), unpacking the sequence of sequentially packed frames in step viii);
when it depends on claim 2:
in step v), unpacking the packed frame sequence sequentially packed in step ii);
in step viii), packing the signals captured in step iv) into a single frame that combines a full frame of L2 with a full frame of R2 to be sent sequentially;
in step ix), sending the result of packing the image in step viii), where the image is sent at twice the frequency of the original images;
when it depends on claim 3:
in step ii), packing the signals captured in step i) into a single frame that combines a full frame of the left image L1 with a full frame of the right image R1 to be sent sequentially;
in step iii), sending the result of packing the image in step ii), where the image is sent at twice the frequency of the original images;
in step v), unpacking the frame sequence sequentially packed in step ii);
in step viii), packing the signals captured in step iv) into a single frame that combines a full frame of L2 with a full frame of R2 to be sent sequentially;
in step ix), sending the result of packing the image in step viii), where the image is sent at twice the frequency of the original images;
in step x), unpacking the sequence of sequentially packed frames in step viii).

6. A computer-implemented method for remotely transmitting and combining multimedia information in a computer network according to claim 1, 2 or 3, wherein:
when it depends on claim 1:
in step ii), packing the signals captured in step i) two by two into a single frame, of larger capacity than the originals: an L1 frame with an R1 frame occupying only half the capacity of the new frame;
in step x), unpacking the frame resulting from packing frame L2 and frame R2 in step viii);
when it depends on claim 2:
unpacking the frame resulting from packing frame L1 and frame R1 in step ii);
in step viii), packing the signals captured in step iv) two by two into a single frame of larger capacity than the originals: an L2 frame with an R2 frame occupying only half the capacity of the new frame;
when it depends on claim 3:
in step ii), packing the signals captured in step i) two by two into a single frame, of larger capacity than the originals: an L1 frame with an R1 frame occupying only half the capacity of the new frame;
in step v), unpacking the frame resulting from packing frame L1 and frame R1 in step ii);
in step viii), packing the signals captured in step iv) two by two into a single frame of larger capacity than the originals: an L2 frame with an R2 frame occupying only half the capacity of the new frame;
in step x), unpacking the frame resulting from packing frame L2 and frame R2 in step viii).

7. A computer-implemented method for remotely transmitting and combining multimedia information in a computer network according to any one of the preceding claims, wherein:
when dependent on claim 1 or any one of claims 4 to 6 when dependent on claim 1:
- sub-step xi.a) further comprises applying (151.1) a transparency effect, preferably the "luma key" technique, to the frame of the second left image (L2) which is overlaid on the frame of the first left image (L1); and
- sub-step xi.b) further comprises applying (153.1) a transparency effect, preferably the "luma key" technique, to the frame of the second right image (R2) which is overlaid on the frame of the first right image (R1);
when dependent on claim 2 or any one of claims 4 to 6 when dependent on claim 2:
- sub-step vi.a) further comprises applying (251.1) a transparency effect, preferably the "luma key" technique, to the frame of the second left image (L2) which is overlaid on the frame of the first left image (L1);
- sub-step vi.b) further comprises applying (253.1) a transparency effect, preferably the "luma key" technique, to the frame of the second right image (R2) which is overlaid on the frame of the first right image (R1);
when dependent on claim 3 or any one of claims 4 to 6 when dependent on claim 3:
- sub-step vi.a) further comprises applying (251.1) a transparency effect, preferably the "luma key" technique, to the frame of the second left image (L2) which is overlaid on the frame of the first left image (L1);
- sub-step vi.b) further comprises applying (253.1) a transparency effect, preferably the "luma key" technique, to the frame of the second right image (R2) which is overlaid on the frame of the first right image (R1);
- sub-step xi.a) further comprises applying (151.1) a transparency effect, preferably the "luma key" technique, to the frame of the second left image (L2) which is overlaid on the frame of the first left image (L1); and
- sub-step xi.b) further comprises applying (153.1) a transparency effect, preferably the "luma key" technique, to the frame of the second right image (R2) which is overlaid on the frame of the first right image (R1).

8. A Computer-implemented method for transmitting and combining multimedia information remotely over a computer network according to any one of the preceding claims wherein:
when dependent on claim 1 or any one of claims 4 to 7 when dependent on claim 1:
sub-steps xi.a) and xi.b) include colouring the overlaid image;
when dependent on claim 2 or any one of claims 4 to 7 when dependent on claim 2:
sub-steps vi.a) and vi.b) include colouring the overlaid image;
when dependent on claim 3 or any one of claims 4 to 7 when dependent on claim 3:
sub-steps vi.a), vi.b), xi.a) and xi.b) include colouring the overlaid image.

9. - A computer-implemented method for remotely transmitting and combining multimedia information in a computer network according to any one of the preceding claims, wherein:
when dependent on claim 1 or any one of claims 4 to 8 when dependent on claim 1:
step xi), further comprising:
c) adjusting (155) the convergence of the frame obtained in sub-step xi.a);
d) adjusting (156) convergence of the frame obtained in sub-step xi.b);
when it depends on claim 2 or any one of claims 4 to 8 when they depend on claim 2:
step vi), further comprises:
c) adjusting (255) the convergence of the frame obtained in sub-step vi.a);
d) adjusting (256) the convergence of the frame obtained in sub-step vi.b);
when dependent upon claim 3 or any one of claims 4 to 8 when dependent upon claim 3:
step vi), further comprises:
c) adjusting (255) the convergence of the frame obtained in sub-step vi.a);
d) adjusting (256) the convergence of the frame obtained in sub-step vi.b);
and step xi), further comprising the following sub-steps:
c) adjusting (155) the convergence of the frame obtained in sub-step xi.a);
d) adjusting (156) convergence of the frame obtained in sub-step xi.b).

10. A computer-implemented method for remotely transmitting and combining multimedia information in a computer network according to claim 4 wherein:
when it depends on claim 1:
blocks A (LA1-RA1, LA2-RA2) and blocks B (LB1-RB1, LB2-RB2) packed in step ii), are packed in an over-under format;
when it depends on claim 2:
blocks A (LA1-RA1, LA2-RA2) and blocks B (LB1-RB1, LB2-RB2) packed in step viii), are packed in an over-under format;
when it depends on claim 3:
blocks A (LA1-RA1, LA2-RA2) and blocks B (LB1-RB1, LB2-RB2) respectively, in steps ii) and viii) are packed in an over-under format.

11. A computer-implemented method for remotely transmitting and combining multimedia information in a computer network according to any one of the preceding claims, wherein:
when dependent on claim 1 or any one of claims 4 to 10 when dependent on claim 1:
the first module (1) comprises first audio capture and reproduction means (1.6);
and the method further comprises the steps of:
- sending audio recorded by the first audio capture and reproduction means (1.6), via the first communication means (1.5), from the first module (1) to the second module (2);
when dependent on claim 2 or any one of claims 4 to 10 when dependent on claim 2:
the second module comprises second audio capture and reproduction means (2.6); and
and the method further comprises the steps of:
- sending audio recorded by the second audio capture and reproduction means (2.6), via the second communication means (2.5), from the second module (2) to the first module (1);
when dependent on claim 3 or any one of claims 4 to 10 when dependent on claim 3:
- the first module (1) comprises first audio capture and reproduction means (1.6);
- the second module comprises second audio capture and reproduction means (2.6); and
wherein the method further comprises the steps of:
- Sending audio recorded by the first audio capture and reproduction means (1.6), via the first communication means (1.5), from the first module (1) to the second module (2); and/or
- sending audio recorded by the second audio capture and reproduction means (2.6), via the second communication means (2.5), from the second module (2) to the first module (1).

12. A computer-implemented method for remotely transmitting and combining multimedia information in a computer network according to any one of the preceding claims wherein:
- steps iii), v) and vi) are carried out simultaneously; and/or
- steps ix), x) and xi) are carried out simultaneously.

13. A computer-implemented method for remotely transmitting and combining multimedia information over a computer network according to any one of the preceding claims wherein the first and/or second stereoscopic 3D image capture means (1.2, 2.2) comprise:
• at least, two micro cameras (1.2.1, 2.2.1) configured for stereoscopic 3D image capture and to enable synchronisation of the stereoscopic 3D image by the first and/or second stereoscopic 3D image processing means (1.4); and
• means of attachment (1.2.2) of said cameras to the first (1) and/or second (2) module configured to adjust the geometry of the two micro cameras to each other.

14. A computer-implemented method for remotely transmitting and combining multimedia information in a computer network according to any one of the preceding claims, wherein the first and/or the second module comprises 3D augmented image convergence adjustment means (1.7, 2.7), wherein said convergence adjustment means (1.7, 2.7) comprise two pedals configured to manually control the convergence of the 3D augmented image, such that the position of the pedals allows adjustment of the depth of one image layer relative to the other.

15. A computer network comprising a first computer module (1) configured to carry out steps i)-iii) and x)-xii) according to claim 1 or any one of claims 4 to 14 when dependent on claim 1;

16. A computer network comprising a second computer module (2) configured to carry out steps iv)-ix) according to claim 2 or any one of claims 4 to 14 when dependent on claim 2;

17. A computer network comprising a first computer module (1) and a second computer module (2) wherein the first module is configured to carry out steps i)-iii) and x)-xii) according to claim 1 or any one of claims 4 to 14 when dependent on claim 1, and the second module is configured to carry out steps iv)-ix) according to claim 3, or any one of claims 4 to 14 when dependent on claim 3;

18. A computer program comprising instructions which, when the program is executed by a computer, causes the computer to carry out the steps of a method according to any one of claims 1 to 14.

19. A computer readable medium comprising instructions which, when executed by a computer, cause the computer to carry out the steps of a method according to any one of claims 1 to 14.
